(19) Europäisches Patentamt
European Patent Office
Office européen des brevets

(11) **EP 2 104 904 B1**

## (12) EUROPÄISCHE PATENTSCHRIFT

(45) Veröffentlichungstag und Bekanntmachung des Hinweises auf die Patenterteilung:
**17.05.2017 Patentblatt 2017/20**

(21) Anmeldenummer: **07817728.4**

(22) Anmeldetag: **24.10.2007**

(51) Int Cl.:
**G06K 9/00** (2006.01)   **G06T 7/00** (2017.01)
**G07C 9/00** (2006.01)

(86) Internationale Anmeldenummer:
**PCT/DE2007/001894**

(87) Internationale Veröffentlichungsnummer:
**WO 2008/049404 (02.05.2008 Gazette 2008/18)**

(54) **VERFAHREN UND VORRICHTUNG ZUR ÜBERWACHUNG EINES RAUMVOLUMENS SOWIE KALIBRIERVERFAHREN**

METHOD AND APPARATUS FOR MONITORING A SPATIAL VOLUME AND A CALIBRATION METHOD

PROCÉDÉ ET DISPOSITIF POUR SURVEILLER UN VOLUME SPATIAL, ET PROCÉDÉ D'ÉTALONNAGE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **25.10.2006 DE 102006050379**

(43) Veröffentlichungstag der Anmeldung:
**30.09.2009 Patentblatt 2009/40**

(73) Patentinhaber: **Vitracom AG**
**76133 Karlsruhe (DE)**

(72) Erfinder: **Link, Norbert, Prof. Dr.**
**76187 Karlsruhe (DE)**

(74) Vertreter: **Geitz Truckenmüller Lucht Christ Patentanwälte PartGmbB**
**Kriegsstrasse 234**
**76135 Karlsruhe (DE)**

(56) Entgegenhaltungen:
EP-A- 1 524 866          WO-A-81/01213
WO-A-2005/048200    DE-A1- 19 732 153
US-A1- 2003 107 649    US-A1- 2004 017 929

**Beschreibung**

Die Erfindung betrifft eine Personenschleuse, welche ein zu überwachendes Raumvolumen (10) einschließt, umfassend eine Mehrzahl von Kameras, wobei die Kameras oberhalb des zu überwachenden Raumvolumens (10) paarweise angeordnet und mit einer Rechenhardware zur Digitalisierung mittels der Kameras erfasster Kamerabilder (34,34') und zur Berechnung jeweils eines dreidimensionalen Raumbilds aus einer Überlagerung der Kamerabilder (34,34') jeweils eines Kamerapaares (11,11') verbunden sind sowie ein Verfahren zur Überwachung eines von einer Personenschleuse umfassten Raumvolumens.

Ein entsprechendes Verfahren ist bereits aus der US 2005/249382 A1 vorbekannt. Das genannte amerikanische Schutzrecht betrifft eine Durchgangsschleuse, welche eine Außen- und eine Innentür umfasst. Im Bereich beider Türen ist jeweils innerhalb der Durchgangschleuse ein zu überwachender Bereich vorgesehen, wobei jeder dieser Bereiche von einem Kamerapaar überwacht wird. Jedes der genannten Kamerapaare hat den von ihm zu überwachenden Bereich im Sichtfeld und ist dazu ertüchtigt, von dem zu überwachenden Bereich ein dreidimensionales Modell zu berechnen. Zur Überwachung des Durchgangs durch die Durchgangsschleuse wird zunächst geprüft, ob eine Person sich im zu überwachenden Bereich vor der Außentür befindet. Sobald dies der Fall ist, wird gleichzeitig geprüft, ob wiederum eine Person sich im zu überwachenden Bereich vor der Innentür aufhält. Demgemäß wird bei einem Einlassbetrieb die Außentür nur dann zur Öffnung freigegeben, wenn sich keine Personen in dem zu überwachenden Bereichen aufhalten, die Innentür, welche zu dem zu sichernden Bereich führt, wird nur dann zur Öffnung freigegeben, wenn sich genau eine Person in dem zu überwachenden Bereich aufhält.

Mithilfe der Kamerapaare werden jeweils zwei zweidimensionale Bilder der zu überwachenden Bereiche angefertigt, mittels derer die sich in dem Bereich aufhaltenden Elemente durch Bestimmung dreidimensionaler Raumpunkte ermitteln lassen. Durch einen Vergleich der auf diese Weise bestimmten dreidimensionalen Elemente mit vorab eingespeicherten Modellen wird im folgenden bestimmt, ob sich eine Person in dem zu überwachenden Bereich befindet.

Das vorbeschriebene Verfahren basiert im wesentlichen darauf, dass zwei getrennte Bereiche mithilfe von dreidimensionalen Bilderfassungssystemen überwacht werden und die Türen der so realisierten Durchgangsschleuse anhand der entsprechenden Informationen gesteuert werden können. Der wesentliche Sinn des Verfahrens besteht vornehmlich darin, zu vermeiden, dass die gesicherte Seite der Durchgangsschleuse nach einer Freigabe derselben für eine Person schließlich gleichzeitig von mehreren Personen betreten wird. Eine mit einer ersten Person "Huckepack" eintretende zweite Person soll aufgrund des erstellten dreidimensionalen Bildes eines jeden Bereichs vorab erkannt werden. Hierzu ist eine Anordnung der jeweiligen Kamerapaare im Bereich oberhalb der Türen der Durchgangsschleuse vorgesehen, so dass eine etwa hinter einer ersten Person stehende zweite Person gleichzeitig von dem Kamerapaar erfasst werden kann.

Trotz dieser vorteilhaften Anordnung existieren jedoch im Schattenbereich der ersten Person nach wie vor Raumpunkte, die von dem jeweiligen Kamerapaar nicht eingesehen werden können. In diesem Bereich können sich jedoch ebenfalls Elemente aufhalten, welche vorteilhafter Weise von der Überwachung erfasst werden sollten.

Zudem stellt die Berechnung von dreidimensionalen Modellen aus der Überlagerung mehrerer zweidimensionaler Bilder eines Kamerapaars eine sehr große Anforderung an die hierfür vorzusehende Rechenhardware dar, welche im Bezug auf die Herstellung einer derart realisierten Durchgangsschleuse einen wesentlichen Kostenpunkt darstellt.

Vor diesem Hintergrund liegt der vorliegenden Erfindung die Aufgabe zu Grunde, eine Personenschleuse sowie ein Verfahren zur Überwachung eines von einer Personenschleuse umfassten Raumvolumens zu schaffen, mithilfe derer eine Überwachung des Raumvolumens weiter verbessert und trotz dieser verbesserten Ergebnisse technisch vereinfacht werden kann.

Dies gelingt mittels einer Personenschleuse gemäß den Merkmalen des Hauptanspruchs sowie einem Verfahren zur Überwachung eines von einer Personenschleuse umfassten Raumvolumens gemäß den Merkmalen des nebengeordneten Anspruchs 7. Weitere Ausgestaltungen der Vorrichtung und des Verfahrens können den jeweiligen Unteransprüchen entnommen werden.

Erfindungsgemäß sind oberhalb eines zu überwachenden Raumvolumens wenigstens zwei Kamerapaare angeordnet, deren Sichtbereich den zu überwachenden Raumbereich zumindest weitgehend abdeckt. Es ist dabei möglich, die wenigstens zwei Kamerapaare einander gegenüberliegend anzuordnen, so dass der zu überwachende Raumbereich auch nach einem Einbringen eines Gegenstandes beziehungsweise nach dem Eintreten einer Person und den damit verbundenen Sichtschattenwurf noch möglichst weitgehend eingesehen werden kann. Demgemäß ist auch eine Anordnung etwa von drei oder vier Kamerapaaren zur Überwachung eines Raumbereichs möglich, wobei insbesondere eine gleichmäßige Verteilung dieser Kamerapaare durchaus sinnvoll erscheint. Jede der Kameras liefert ein einzelnes Kamerabild, wobei die Bilder jeweils eines Kamerapaars zu einem Stereobild derart kombinierbar sind, dass ein dreidimensionales Raumbild entsteht. Anhand jedes dieser dreidimensionalen Raumbilder kann ein Höhenprofil des zu überwachenden Raumbereichs erstellt werden, wobei durch Schattenwurf auf einem Bild nicht erkennbare Punkte durch solche Punkte ergänzt werden können, die im Sichtbereich anderer Kamerapaare gelegen sind. Aufgrund dieser Überlagerung verschiedener Raumbilder entsteht ein weitgehend vollständiges Höhenprofil des zu überwachenden Bereichs, mit welchem sodann Modelle aus einer Modellbibliothek verglichen werden. Nachdem ein Modell in das erstellte Höhenprofil eingepasst werden konnte, wird im folgenden versucht, in etwa verbleibende Bereiche des Profils weitere Modelle einzupassen. Erst wenn das Höhenprofil insoweit weitestgehend vollständig gefüllt ist, ist die Erkennung abgeschlossen. Anhand der verwendeten Modelle kann nunmehr darauf zurückgeschlossen werden, wie viele Personen und/oder Gegenstände in dem zu überwachenden Bereich vorhanden sind.

Die Kamerapaare sind mit Vorteil oberhalb des zu überwachenden Raumvolumens oder zumindest in dessen oberem Bereich angeordnet, so dass im zu überwachenden Raumbereich vorhandene Objekte einen möglichst großen Abstand von den Kamerapaaren einnehmen. Zudem ist von einer erhöhten Position herab ein besser geeigneter Betrachtungswinkel einnehmbar, in dem der zu überwachende Raumbereich weitgehend enthalten ist.

Das zu überwachende Raumvolumen kann zumindest einseitig räumlich begrenzt sein, etwa durch eine Absperrung oder durch eine Wand, so dass auf diese Weise die Positionierung der im zu überwachenden Raumbereich vorhandenen Objekte vereinfacht ist. Wäre die Positionierung der genannten Objekte völlig frei wählbar, so müsste ein wesentlich größerer Bereich überwacht werden. Auch durch entsprechende Markierungen, etwa durch Anzeichnungen auf dem Boden, wäre ein zu überwachender Bereich ohne weiteres abgrenzbar.

Solcherlei Begrenzungen fallen mit besonderem Vorteil zumindest weitgehend mit den Grenzen des Sichtbereichs der Kameras zumindest jeweils einseitig zusammen. Umgekehrt bedeutet dies, dass die Sichtbereiche der Kameras wenigstens einseitig an den Begrenzungen des zu überwachenden Raums enden. Hierdurch wird gewährleistet, dass die Kameras möglichst wenig redundante Information, wie etwa Informationen über die Wandung des Raumbereichs oder außerhalb des zu überwachenden Bereichs liegende Objekte zu verarbeiten hat. Ebenfalls ist es von Vorteil, wenn wenigstens einseitig eine dem Kamerapaar gegenüberliegende Raumbegrenzung oberhalb einer vorgebbaren Kopfhöhe von der Sichtgrenze geschnitten wird. Hierdurch soll bewirkt werden, dass selbst große Personen, welche in den zu überwachenden Raumbereich eintreten, noch vollständig von den Kameras erfasst werden, selbst wenn sie im ungünstigsten Falle direkt an einer der Außenbegrenzungen des Bereichs stehen.

In vorteilhafter Weiterbildung dieser Vorrichtung werden die Sichtstrahlen der einzelnen Kameras mithilfe jeweils zumindest einer Spiegelanordnung derart umgeleitet, dass die Kamerapaare trotz einer indirekten Ausrichtung das zuvor beschriebene Sichtfeld haben. Dementsprechend ist es durch eine solche Spiegelanordnung ermöglicht, die Kameras zumindest annähernd waagerecht oberhalb des zu überwachenden Raumvolumens anzuordnen, so dass eine besonders flache Bauform erreicht wird. Die Längsachse der Kameras verläuft dadurch weitgehend waagerecht, während sie bei einer direkten Ausrichtung auf das Objekt weitgehend senkrecht angebracht werden müsste.

Der vorbeschriebenen Vorrichtung ist mit Vorteil eine Rechenhardware und/oder eine Rechensoftware zugeordnet, mithilfe derer eine Digitalisierung der Kameradaten vorgenommen werden kann. Aufgrund dieser digitalisierten Daten können nachfolgend die dreidimensionalen Raumbilder berechnet werden, auf deren Basis die Bestimmung eines Höhenprofils durchgeführt werden kann.

Mit Vorteil ist die vorbeschriebene Anordnung einer Personenschleuse derart zugeordnet, dass innerhalb des Schleusenbereichs befindliche Personen und/oder Gegenstände mithilfe der Kameradaten erfassbar und erkennbar sind. Durch den Vergleich des erstellten Höhenprofils mit Modellen aus einer Modellbibliothek kann entschieden werden, ob zu einem Zeitpunkt lediglich eine oder doch mehrere Personen durch die Personenschleuse hindurchtreten, so dass eine etwa erforderliche Personenvereinzelung durch die erfindungsgemäße Vorrichtung unterstützt werden kann.

Zur Kalibrierung der jeweiligen Kamerapaare, welche zur Überwachung des Raumvolumens eingesetzt werden, ist es erfindungsgemäß vorgesehen, zunächst eine Laborkalibrierung der inneren Abbildungsparameter vorzunehmen. Das Verfahren benötigt als innere Abbildungsparameter lediglich die Kammerkonstante und die radiale Linsenverzeichnung. Dieser Laborkalibrierung werden zunächst die einzelnen Kameras zugeführt, welche nach der Kalibrierung paarweise zu Kamerapaaren zusammengefasst werden. Vor Ort, das heißt also nach einem Anbringen der Kamerapaare an einem zu überwachenden Raumbereich, wird zur Kalibrierung der äußeren Orientierung des Kamerapaars zunächst für jede der Kameras eine Homographie bestimmt, welche eine Abbildung der von der Kamera aufgenommenen Bildpunkte auf eine Referenzebene darstellt. Die Referenzebene wird im zu überwachenden Raum in geeigneter Weise ausgewählt. Dieser Schritt wird für eine zweite, zur ersten vorzugsweise parallelen, Referenzebene entsprechend durchgeführt. Als letzter Kalibrierungsschritt wird für jedes Kamerapaar eine Epipolargeometrie erstellt, mit deren Hilfe jedem von den Kameras erfassten Raumpunkt ein Höhenwert zugeordnet werden kann.

Im Rahmen dieser Kalibrierung wird die zu kalibrierende Kamera bezüglich eines Kalibrierkörpers, vorzugsweise eines Quadratgitters, so aufgestellt, dass dieses Quadratgitter flächig vor der jeweiligen Kamera angeordnet ist. Mithilfe des Kalibrierkörpers wird eine positive oder eine negative Verzerrung festgestellt, wobei das Zentrum der radialen Verzeichnung beziehungsweise der Verzerrung anhand des Lenz'schen Modells bestimmt wird. Zur Bestimmung der Kammerkonstante wird das Quadratgitter in definiertem Abstand vor der Kamera, welche bezüglich der radialen Verzeichnung bereits korrigiert ist, aufgestellt. Gemäß dem Strahlensatz berechnet sich dann die Kammerkonstante c wie folgt:

$$r\delta/R = -c/D$$

wobei R der Abstand eines Gitterpunktes von der Gittermitte, r der Abstand des korrespondierenden Kamerabildpunktes von der Kamerabildmitte, $\delta$ der physikalische Abstand zweier Kamerabildpunkte und D der Abstand des optischen Zentrums der Kamera zum Kalibrierkörper ist.

In einem nächsten Schritt werden die Kamerapaare vor Ort angeordnet und wiederum vorkalibriert. Diese erste vor-Ort-Kalibrierung erfordert zunächst die Einführung einer Referenzebene, sowie einer vorzugsweise zur Referenzebene parallel liegende Hilfsebene. Die Referenzebene wird vorzugsweise durch eine Anordnung zueinander rechtwinklig situierter Markierungen bestimmt, deren Positionen im Raum vorbekannt sind. Durch einen Vergleich der Kamerabilder mit der realen Anordnung auf der Referenzebene wird eine Abbildungsvorschrift zur Abbildung der Referenzebene auf den jeweiligen Kameras, eine so genannte Homographie, bestimmt. Eine solche Homographie wird für beide Kameras eines jeden Kamerapaars ermittelt. Die so erhaltenen Parameterwerte der Homographien werden für die Verwendung im Auswertezyklus der jeweils aktuellen Kamerabilder abgespeichert.

Schließlich wird für jedes Kamerapaar zusätzlich eine Epipolargeometrie festgelegt, welche durch Warpen des jeweiligen Kamerabildes auf die Referenzebene ermöglicht wird. Wird ein beliebiger Raumpunkt betrachtet, so liegen bezüglich dieses Raumpunkts die Bildpunkte der jeweiligen Kameras auf einer Linie der Referenzebene. Diese Linien werden Epipolarlinien genannt, mithilfe der normierten Kreuzkorrelationsfunktionen als Ähnlichkeitsmaß werden längs der Epipolarlinien die Koordinaten der homologen Punkte beider Bilder bestimmt.

Mit Vorteil wird als Referenzebene die Bodenfläche des zu überwachenden Raumvolumens definiert.

Ein kalibriertes Kamerapaar nimmt an dem erfindungsgemäßen Verfahren zur Überwachung eines Raumvolumens teil. Im Bereich eines zu überwachenden Raumvolumens wird dazu eine Mehrzahl solcher Kamerapaare derart angeordnet, dass das zu überwachende Raumvolumen von den verschiedenen Kameras aus unterschiedlichen Raumrichtungen betrachtet wird. Die dreidimensionalen Raumbilder jedes Kamerapaars werden gemeinsam so ausgewertet, dass aufgrund von Schattenwürfen nicht darstellbare Raumpunkte jeweils mithilfe von Raumbildern anderer Kamerapaare ergänzt werden.

Zur Handhabung der jeweiligen Videodaten werden die von den einzelnen Kameras stammenden Videodatenströme digitalisiert und entsprechender Rechenhardware und/oder Rechensoftware zugeführt.

Die Kamerabilder der einzelnen Kameras werden aufgrund von Kalibrierdaten korrigiert, erst die solchermaßen korrigierten Kamerabilder werden der weiteren Berechnung zu Grunde gelegt. Die weitere Berechnung sieht dabei vor, ein dreidimensionales Raumbild des Sichtbereichs der jeweiligen Kamerapaare zu erstellen, wonach für jeden Raumpunkt ein Höhenwert berechnet und auf diese Weise ein Höhenprofil des überwachten Raumes bestimmt wird.

Das Höhenprofil ist mit Vorteil auf die Referenzebene zu beziehen, wobei die einzelnen Raumpunkte mithilfe von Homographien und Geradenschnitten im Raum errechnet werden. Zur schnelleren Berechnung des genannten Höhenprofils wird durch die homographische Abbildung der beiden Bilder eines Kamerapaars auf die Referenzebene die Epipolargeometrie zwischen den beiden Bildern hergestellt, wodurch homologe, also zum gleichen Raumpunkt gehörige, Bildpunkte auf der gleichen Epipolarlinie der Kamerabilder liegen. Der Höhenwert wird dann bestimmt durch den Schnittpunkt zweier Geraden desselben Raumpunktes, welche sich aus den Durchstoßpunkten der Sichtstrahlen durch die Hilfsebene ergeben. Mithilfe jeweils einer zweiten Homographie, nämlich zwischen jeweils einem Kamerabild und der Hilfsebene, werden die gefundenen homologen Punkte auf die Hilfsebene transformiert. Der Schnittpunkt der beiden Sichtstrahlen der Kamerabilder, welche jeweils einen Kamerabildpunkt und den korrespondierenden Punkt auf der Hilfsebene durchstoßen, entspricht dem gesuchten Raumpunkt.

Dadurch, dass möglicherweise nicht alle Abbildungsfehler beziehungsweise numerische Fehler bei der Ermittlung der Homographien berücksichtigt werden können, werden in der Praxis die Sichtstrahlen keinen gemeinsamen Schnittpunkt aufweisen. Vielmehr werden die beiden Sichtstrahlen eines Kamerapaars zueinander windschief im Raum liegen, wodurch eine Abschätzung der Raumposition des gesuchten Raumpunktes erforderlich wird. Hierzu wird der Abstand der beiden Sichtstrahlen bestimmt und der Mittelpunkt der Abstandstrecke zwischen den beiden Sichtstrahlen als der gesuchte Punkt vermutet.

Im Anschluss an die Ermittlung des aus den derart gewonnenen Höhenwerten der einzelnen Raumpunkte bestehenden Höhenprofils wird dieses mit in einer Modellbibliothek gespeicherten Standardmodellen verglichen. Diese Standardmodelle werden in das Höhenprofil eingesetzt und geprüft, ob das Höhenprofil zumindest einem der vorgegebenen Modelle entspricht. Soweit dies der Fall ist, wird das dem Modell entsprechende Objekt als erkannt betrachtet. In vorteilhafter Weiterführung dieses Verfahrens wird nachfolgend geprüft, ob sich weitere Standardmodelle in dem verbleibenden Raum des Höhenprofils einfügen lassen. In der konkreten Anwendung, etwa als Durchgangsschleuse zur Personenvereinzelung, ließe sich diese Anwendung dahingehend erweitern, dass bei der Erkennung von mehr als einem Objekt ein Alarm beziehungsweise eine Sperrung der Durchgangsschleuse bewirkt wird.

Die vorstehend beschriebene Erfindung wird im folgenden anhand eines in der Zeichnung dargestellten Ausführungsbeispiels näher erläutert.

Es zeigen

Figur 1      eine erfindungsgemäße Vorrichtung mit einem abgegrenzten, zu überwachenden Raumvolumen in einer seitlichen Schnittdarstellung,

Figur 2      die Vorrichtung gemäß Figur 1 mit einer Spiegelanordnung und waagerecht angeordneten Kamerapaaren in einer seitlichen Schnittdarstellung,

Figur 3      eine Projektion der Sichtfelder zwei einander gegenüberliegender Kamerapaare auf den Boden eines zu überwachenden Raumbereichs,

Figur 4      eine Darstellung eines Quadratgitters mit kissenförmiger beziehungsweise tonnenförmiger Verzeichnung,

Figur 5      eine Darstellung der Anordnung zweier Kamerabilder in Bezug auf eine Referenzebene zur Kalibrierung eines Kamerapaars, und

Figur 6      eine Darstellung der Anordnung zweier Kamerabilder in Bezug auf eine Referenzebene sowie eine Hilfsebene zur Berechnung der Position eines Raumpunktes.

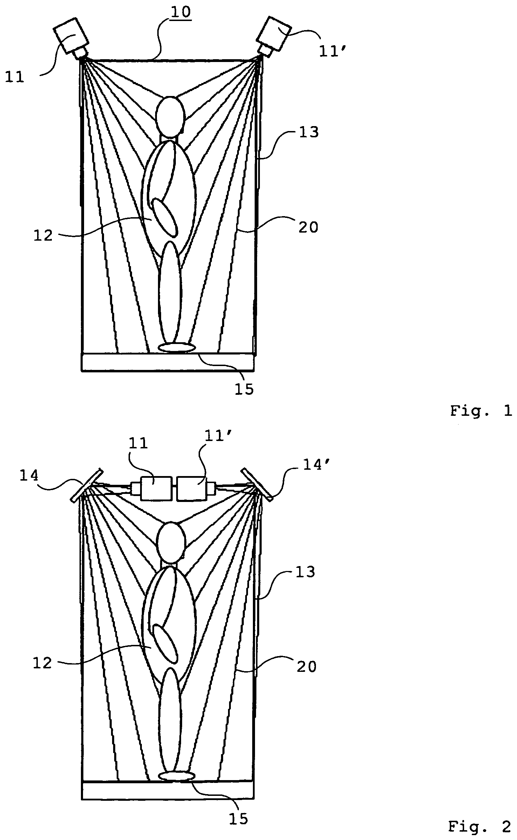

Figur 1 zeigt ein zu überwachendes Raumvolumen 10, welches von zwei Kamerapaaren 11,11' überwacht wird. Die beiden, im Bild hintereinander liegenden, Kameras jeweils eines Kamerapaars 11,11' sind derart geneigt, dass die äußersten Sichtstrahlen 20 der Kamerapaare 11,11' im Bereich der jeweils näher liegenden Wand 13 zumindest weitgehend parallel zu dieser oder entlang dieser verlaufen und im Bereich der jeweils gegenüberliegenden Wand 13 diese Wand 13 in einer Höhe schneiden, die höher ist als die Kopfhöhe einer etwa in dem zu überwachenden Raumvolumen 10 befindlichen Person 12. Durch die Anordnung einander gegenüberliegender Kamerapaare 11,11' ist gewährleistet, dass sich im von der Person 12 abgeschatteten Bereich kein weiteres Objekt beziehungsweise keine weitere Person 12 befinden kann. Wäre dies der Fall, so könnte dieses Objekt beziehungsweise diese Person 12 von dem zweiten Kamerapaar 11,11' erfasst werden, welches das zu überwachende Raumvolumen 10 aus einem anderen Blickwinkel betrachtet. Jedes der im Bereich des zu überwachenden Raumvolumens 10 angeordneten Kamerapaare 11,11' erzeugt ein dreidimensionales Raumbild, mithilfe dessen ein Höhenprofil des zu überwachenden Raumvolumens 10 bestimmt werden kann. Soweit die Raumpunkte des Raumvolumens 10 von einem Kamerapaar 11,11' nicht erfasst werden können, wird für die nicht einsehbaren Raumpunkte auf das von dem anderen Kamerapaar 11,11' bereitgestellte dreidimensionale Raumbild zurückgegriffen. Das auf diese Weise vervollständigte Höhenprofil des zu überwachenden Raumvolumens 10 wird nachfolgend mit Standardmodellen verglichen, welche in einer Modellbibliothek vorgehalten werden. Es werden solange Standardmodelle in das Höhenprofil eingefügt, bis festgestellt werden kann, welche Objekte sich in dem zu überwachenden Raumvolumen 10 befinden.

In Figur 2 ist ein ähnlich aufgebautes zu überwachendes Raumvolumen 10 dargestellt, wobei in den Lichtweg der dort waagerecht oberhalb des zu überwachenden Raumbereichs 10 angebrachten Kamerapaare 11,11' jeweils eine Spiegelanordnung 14,14' eingebracht ist, so dass sich zwar im Blickfeld der Kamerapaare 11,11' jeweils das gleiche Objekt, nämlich die Person 12, befindet, die Gesamthöhe der Anordnung jedoch im Vergleich zur vorhergehenden Anordnung der Kamerapaare 11,11' verringert ist. Eine solche Bauform ist insbesondere für Durchgangsschleusen besonders geeignet, welche häufig Platz sparend mit geringer Bauhöhe ausgeführt sein müssen. Auch ist gerade für den Einsatz zur Personenvereinzelung im Bereich einer Durchgangsschleuse das vorgeschlagene System, nämlich die Ergänzung eines dreidimensionalen Raumbildes durch ein zweites ebensolches Raumbild aus einer anderen Raumrichtung besonders geeignet, da auf diese Weise das Einschleusen mehrerer Personen "Huckepack" verhindert wird. Sobald in einer solchen Durchgangsschleuse mehrere Personen 12 vorhanden sind, wird dies von den Kamerapaaren 11,11' erkannt und von einer etwaigen Bearbeitungssoftware beziehungsweise -hardware entsprechend reagiert.

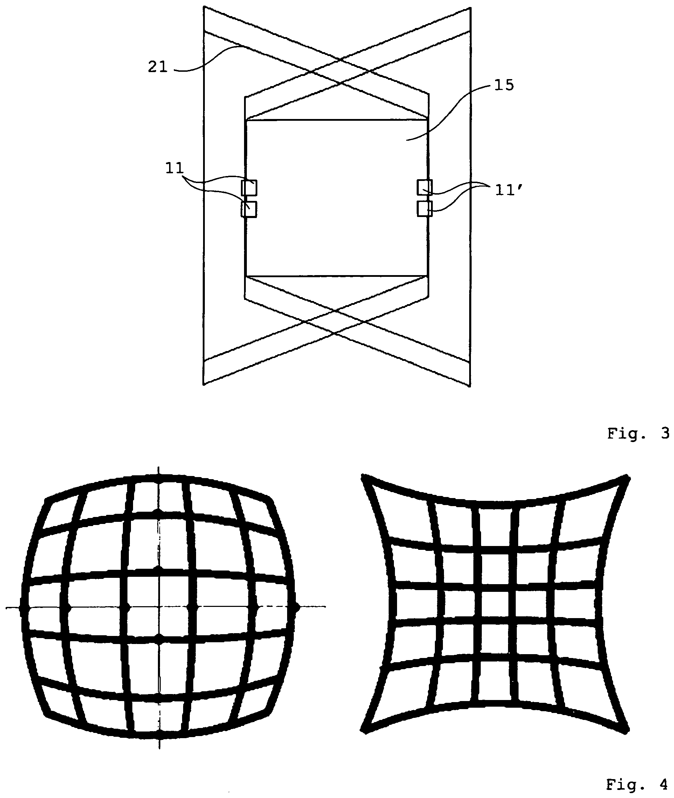

Figur 3 zeigt eine Projektion der von den einzelnen Kameras der Kamerapaare 11,11' abgedeckten Sichtfelder auf den Boden 15 des zu überwachenden Raumbereichs 10. Es wird deutlich, dass bereits jede einzelne der verwendeten Kameras der Kamerapaare 11,11 Strich den vollständigen Bereich des Raumvolumens 10 weitgehend abdeckt. Hierdurch ist gewährleistet, dass jeder Raumpunkt, soweit er von einer der Kameras möglicherweise durch Abschattung nicht erfasst werden kann, sehr wahrscheinlich doch zumindest von einer anderen Kamera überwacht wird.

Figur 4 zeigt ein Quadratgitter zur Kalibrierung der einzelnen Kameras eines Kamerapaars 11,11', wobei die Kalibrierung der Kameras anhand des Quadratgitters im Labor stattfindet. Das Quadratgitter wird vor der zu kalibrierenden Kamera senkrecht aufgestellt, so dass die Mitte des Quadratgitters in der Bildmitte des Kamerabildes zu liegen kommt. Im folgenden werden verschiedene Kameraparameter bestimmt, darunter der Hauptpunkt, die radiale Verzeichnung und die Kammerkonstante. In der Figur 4 sind zwei mögliche Ansichten des Quadratgitters vor einer Kalibrierung dargestellt, nämlich einmal die kissenförmige Verzeichnung im linken Bild und einmal die tonnenförmige Verzeichnung im rechten Bild. Durch die Kalibrierung der einzelnen Kameras wird bewirkt, dass die Verzeichnung der einzelnen Kameras so kompensiert wird, dass das Quadratgitter nach der Fehlerkorrektur quadratisch, also mit geraden Kanten, interpretiert wird.

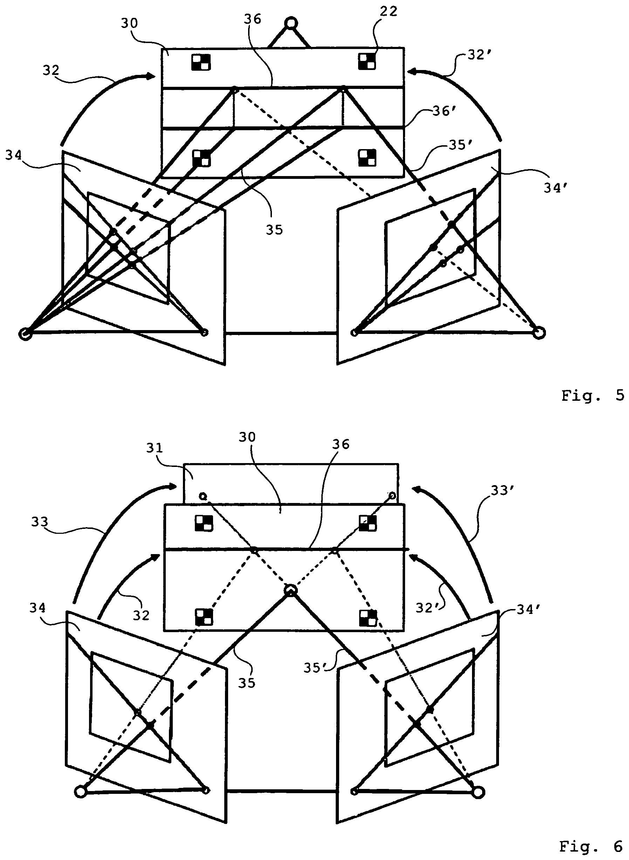

Figur 5 zeigt eine Anordnung der Kameras eines Kamerapaars 11,11', welche bereits vor Ort montiert sind und in ihrer bestimmungsgemäßen Position ebenfalls weitere Kalibrierungsschritte durchlaufen müssen. Zunächst wird hierzu eine Referenzebene 30 eingeführt, zum Beispiel die Bodenfläche 15, auf welche die Höhenpunkte des späteren Höhenprofils bezogen werden. Im Zuge der Kalibrierung wird zunächst jeweils eine Homographie 32,32' zwischen den jeweiligen Kamerabildern 34,34' und der Referenzebene dadurch bestimmt, dass Markierungen 22 an definierter Position auf der Referenzebene 30 angeordnet werden und durch einen Vergleich der Realität mit dem Kamerabild 34,34' eine Abbildungsvorschrift, nämlich eine Homographie 32,32' zwischen Kamerabild 34,34' und Referenzebene 30 bestimmt wird. Die so errechneten Homographien 32, 32' werden für den späteren Auswertezyklus gespeichert. In einem weiteren Kalibrierungsschritt wird eine Epipolargeometrie eingeführt, welche so auf die Referenzebene gelegt wird, dass homologe Punkte, also einander korrespondierende Punkte auf den Kamerabildern 34,34' eines Kamerapaars 11,11' jeweils auf einer Epipolarlinie 36,36' des Epipolargeometriesystems zu liegen kommen. Zur Bestimmung der Koordinaten der jeweiligen homologen Punkte wird die Kreuzkorrelationsfunktion als Ähnlichkeitsmaß verwendet.

Figur 6 zeigt schließlich, wie eine Auswertung und die Erstellung eines Höhenprofils im Einzelnen ablaufen. Ein von beiden Kameras des Kamerapaars 11,11' erfasster Raumpunkt wird herausgegriffen, wobei dieser für beide Kameras auf einer gemeinsamen Epipolarlinie 36 liegt. Der herausgegriffene Raumpunkt liegt dann für beide Kameras auf einem Sichtstrahl 35,35', welcher durch den Bildpunkt des Kamerabildes 34,34' und die Homographie 33,33' des Kamerabildes auf eine zur Referenzebene 30 parallele Hilfsebene 31 hindurchstößt. Im Schnittpunkt der beiden Sichtstrahlen 35,35' befindet sich dann der gesuchte Raumpunkt. Die Höhenlage des gesuchten Raumpunkts bezüglich des Bodens 15 beziehungsweise der dort angesiedelten Referenzebene 30 kann nachfolgend geometrisch berechnet werden. Durch ein entsprechendes Vorgehen für alle von den Kameras erfassten Bildpunkte entsteht ein Höhenprofil, welches die in dem zu überwachenden Raumvolumen 10 enthaltenen Objekte abbildet.

Vorstehend ist somit ein Verfahren sowie eine Vorrichtung zur Überwachung eines Raumvolumens beschrieben, welche in der Anwendung den Vorteil aufweisen, dass eine vollständige Überwachung des Raumvolumens gewährleistet werden kann, während gleichzeitig eine vereinfachte Vorgehensweise zur Erlangung der dreidimensionalen Informationen gelehrt wird.

**BEZUGSZEICHENLISTE**

| | |
|---|---|
| 10 | Raumvolumen |
| 11,11' | Kamerapaar |
| 12 | Person |
| 13 | Wand |
| 14,14' | Spiegelanordnung |
| 15 | Bodenfläche |
| 20 | Sichtstrahlen |
| 21 | Sichtbereich |
| 22 | Markierung |
| 30 | Referenzebene |
| 31 | Hilfsebene |
| 32,32' | Homographie zwischen Kamerabild und Referenzebene |
| 33,33' | Homographie zwischen Kamerabild und Hilfsebene |
| 34,34' | Kamerabild |
| 35,35' | Sichtstrahlen |
| 36,36' | Epipolarlinien |
| 40 | Positive Verzerrung |
| 41 | Negative Verzerrung |

**Patentansprüche**

1.   Personenschleuse, welche ein zu überwachendes Raumvolumen (10) einschließt, umfassend eine Mehrzahl von Kameras, wobei die Kameras oberhalb des zu überwachenden Raumvolumens (10) paarweise angeordnet und mit einer Rechenhardware zur Digitalisierung mittels der Kameras erfasster Kamerabilder (34,34') und zur Berechnung jeweils eines dreidimensionalen Raumbilds aus einer Überlagerung der Kamerabilder (34,34') jeweils eines Kamerapaares (11,11') verbunden sind, **dadurch gekennzeichnet, dass** wenigstens zwei Kamerapaare (11,11') oberhalb des zu überwachenden Raumvolumens (10) einander gegenüberliegend angeordnet und aus unterschiedlichen Raumrichtungen darauf gerichtet sind, wobei jede einzelne Kamera der Kamerapaare (11,11') den Bereich des zu überwachenden Raumvolumens (10) zumindest weitgehend abdeckt, wobei mittels der Rechenhardware aus den Kamerabildern (34,34') jeweils eines Kamerapaares (11,11') jeweils ein dreidimensionales Raumbild erstellt und aus diesem ein Höhenprofil bestimmt wird, wobei ein gemeinsames Höhenprofil dadurch vervollständigt wird, dass die in dem jeweiligen Raumbild bzw. Höhenprofil aufgrund von Schattenwürfen nicht darstellbaren Raumpunkte mithilfe von Raumbildern bzw. Höhenprofilen anderer Kamerapaare (11,11') ergänzt werden.

2. Personenschleuse gemäß Anspruch 1 , **dadurch gekennzeichnet, dass** das zu überwachende Raumvolumen (10) wenigstens einseitig räumlich begrenzt, etwa von zumindest einer Wand (13) und/oder zumindest einer Absperrung abgegrenzt oder eingeschlossen ist.

3. Personenschleuse gemäß einem der vorhergehenden Ansprüche, **dadurch gekennzeichnet, dass** der Sichtbereich (21) der Kameras derart ausgerichtet ist, dass die Grenzen des Sichtbereichs (21) wenigstens einseitig zumindest weitgehend parallel zur Begrenzung des zu überwachenden Raumvolumens (10) verlaufen.

4. Personenschleuse gemäß einem der vorhergehenden Ansprüche, **dadurch gekennzeichnet, dass** der Sichtbereich (21) der Kameras derart ausgerichtet ist, dass die Grenzen des Sichtbereichs (21) wenigstens einseitig eine dem Kamerapaar (11,11') gegenüberliegende Raumbegrenzung oberhalb einer vorgebbaren Kopfhöhe schneiden.

5. Personenschleuse gemäß einem der vorhergehenden Ansprüche, **dadurch gekennzeichnet, dass** die Kameras mit im Wesentlichen waagerecht oberhalb des Raumbereichs ausgerichteter Längsachse angeordnet sind, wobei im Sichtfeld der Kameras eine Spiegelanordnung (14,14') angeordnet ist, über welche die Kameras den Raumbereich einsehen.

6. Personenschleuse gemäß einem der vorhergehenden Ansprüche, **dadurch gekennzeichnet, dass** die den Kameras zugeordnete Rechenhardware und/oder eine Rechensoftware zur Digitalisierung von Kameradaten, sowie zur Erstellung eines Höhenprofils des zu überwachenden Raumvolumens (10) über einer Referenzebene (30) auf Basis dieser Kameradaten, ertüchtigt ist.

7. Verfahren zur Überwachung eines von einer Personenschleuse umfassten, zu überwachenden Raumvolumens (10) mithilfe einer Mehrzahl von aus paarweise oberhalb des Raumvolumens (10) angeordneten Kameras bestehenden Kamerapaaren (11,11'), deren einzelne Kameras den Bereich des Raumvolumens jeweils zumindest weitgehend abdecken, **dadurch gekennzeichnet, dass** die Kamerapaare (11, 11') einander gegenüberliegend angeordnet, aus unterschiedlichen Raumrichtungen auf das zu überwachende Raumvolumen (10) gerichtet und mit einer Rechenhardware zur Digitalisierung mittels der Kameras erfasster Kamerabilder (34,34') und zur Berechnung jeweils eines dreidimensionalen Raumbilds aus einer Überlagerung der Kamerabilder (34,34') jeweils eines Kamerapaares (11,11') verbunden sind, wobei mittels der Rechenhardware aus den Kamerabildem (34,34') jeweils eines Kamerapaares (11,11') jeweils ein dreidimensionales Raumbild erstellt und aus diesem ein Höhenprofil bestimmt wird, wobei ein gemeinsames Höhenprofil dadurch vervollständigt wird, dass die in dem jeweiligen Raumbild bzw. Höhenprofil aufgrund von Schattenwürfen nicht darstellbaren Raumpunkte mithilfe von Raumbildern bzw. Höhenprofilen anderer Kamerapaare (11,11') ergänzt werden.

8. Verfahren gemäß Anspruch 7, **dadurch gekennzeichnet, dass** die von den einzelnen Kameras und/oder den Kamerapaaren (11,11') stammenden Videodatenströme digitalisiert werden.

9. Verfahren gemäß einem der Ansprüche 7 oder 8, **dadurch gekennzeichnet, dass** das Höhenprofil auf eine Referenzebene (30) bezogen ist, wobei die Raumpunkte mithilfe von Homographien (32,32'33,33') und Geradenschnitten im Raum errechnet werden.

10. Verfahren gemäß Anspruch 9, **dadurch gekennzeichnet, dass** die Lage der einzelnen Raumpunkte als Schnittpunkt der Sichtstrahlen (35,35') beider Kameras eines Kamerapaares (11,11') auf den jeweiligen Raumpunkt bestimmt wird.

11. Verfahren gemäß einem der Ansprüche 7 bis 10, **dadurch gekennzeichnet, dass** das erstellte Höhenprofil mit Standardmodellen, nämlich Standard-Höhenprofilen von im überwachten Raumvolumen erwarteten Personen oder Objekten, verglichen wird.

12. Verfahren gemäß Anspruch 11, **dadurch gekennzeichnet, dass** nach der Erkennung eines Standardmodells geprüft wird, ob ein weiteres Standardmodell im verbleibenden Raum einfügbar ist.

## Claims

1. A pass-through compartment for persons, which encloses a spatial volume (10) to be monitored, comprising a plurality of cameras, wherein the cameras are disposed in pairs above the spatial volume (10) to be monitored and are connected to computer hardware for digitising camera images (34, 34') taken by means of the cameras and for calculating a respective three-dimensional spatial image from superimposing the camera images (34, 34') of a respective camera pair (11, 11'), **characterized in that** at least two camera pairs (11, 11') are arranged mutually opposite each other above the spatial volume (10) to be monitored and are directed towards said volume from different spatial directions, wherein each individual camera of the camera pairs (11, 11') at least substantially covers the region of the spatial volume (10) to be monitored, wherein a respective three-dimensional spatial image is prepared by means of the computer hardware from the camera images (34, 34') of a respective camera pair (11, 11') and a height profile is determined therefrom, wherein a common height profile is completed in such a way that the spatial points which cannot be represented in the respective spatial image or height profile as a result of shadowing are supplemented by means of spatial images or height profiles of other camera pairs (11, 11').

2. A pass-through compartment according to claim 1, **characterized in that** the spatial volume (10) to be monitored is spatially delimited or enclosed at least on one side, e.g. by at least one wall (13) an/or at least one barrier.

3. A pass-through compartment according to one of the preceding claims, **characterized in that** the field of vision (21) of the cameras is oriented in such a way that the boundaries of the field of vision (21) extend at least on one side substantially parallel to the boundary of the spatial volume (10) to be monitored.

4. A pass-through compartment according to one of the preceding claims, **characterized in that** the field of vision (21) of the cameras is oriented in such a way that the boundaries of the field of vision (21) intersect at least on one side a spatial boundary above a predeterminable head height, said boundary being opposite the camera pair (11, 11').

5. A pass-through compartment according to one of the preceding claims, **characterized in that** the cameras are arranged with a longitudinal axis aligned substantially horizontally above the spatial region, wherein a mirror arrangement (14, 14') is arranged in the field of vision of the cameras, via which the cameras see the spatial region.

6. A pass-through compartment according to one of the preceding claims, **characterized in that** the computer hardware and/or computer software associated with the cameras is fitted for digitising camera data and for preparing a height profile of the spatial volume (10) to be monitored above a reference plane (30) on the basis of said camera data.

7. A method for monitoring a spatial volume (10) to be monitored, which is surrounded by a pass-through compartment, by means of a plurality of camera pairs (11, 11') which consist of cameras arranged in pairs above the spatial volume (10) and whose individual cameras at least substantially cover the region of the spatial volume, **characterized in that** the camera pairs (11, 11') are arranged mutually opposite each other, are directed from different spatial directions to the spatial volume (10) to be monitored, and comprise computer hardware for digitising camera images (34, 34') recorded by means of the cameras and for calculating a respective three-dimensional spatial image from a superimposition of the camera images (34, 34') of a respective camera pair (11, 11'), wherein a respective three-dimensional spatial image is prepared by means of the computer hardware from the camera images (34, 34') of a respective camera pair (11, 11') and a height profile is determined therefrom, wherein a common height profile is completed in such a way that the spatial points which cannot be represented in the respective spatial image or height profile as a result of shadowing are supplemented by means of spatial images or height profiles of other camera pairs (11, 11').

8. A method according to claim 7, **characterized in that** the video data streams originating from the individual cameras and/or the camera pairs (11, 11') are digitised.

9. A method according to one of the claims 7 or 8, **characterized in that** the height profile is put into relation with a reference plane (30), wherein the spatial points are calculated by means of homographs (32, 32', 33, 33') and straight line intersections in space.

10. A method according to claim 9, **characterized in that** the position of the individual spatial points is determined as the intersection point of the sight beams (35, 35') of the two cameras of a camera pair (11, 11') to the respective spatial point.

11. A method according to one of the claims 7 to 10, **characterized in that** the prepared height profile is compared with standard models, namely standard height profiles of persons or objects expected in the monitored spatial volume.

12. A method according to claim 11, **characterized in that** a check is carried out after recognising a standard model whether a further standard model can be inserted into the remaining space.

## Revendications

1. Sas pour personnes renfermant un volume d'espace à surveiller (10), comprenant plusieurs caméras, lesquelles caméras sont disposées par paires au-dessus du volume d'espace à surveiller (10) et étant connectées avec un matériel de calculateur pour la numérisation d'images de caméra (34, 34') acquises au moyen des caméras et pour le calcul d'une image de l'espace en trois dimensions à partir d'une superposition des images de caméra (34, 34') de chaque paire de caméras (11, 11'),

**caractérisé en ce qu'**au moins deux paires de caméras (11, 11') sont disposées l'une en face de l'autre au-dessus du volume d'espace à surveiller (10) et dirigées vers celui-ci depuis des directions différentes de l'espace, chaque caméra des paires de caméras (11, 11') couvrant au moins en grande partie la zone du volume d'espace à surveiller (10), une image de l'espace à trois dimensions étant créée au moyen du matériel de calculateur à partir des images de caméra (34, 34') de chaque paire de caméras (11, 11') et un profil de hauteur étant déterminé à partir de celle-ci, un profil de hauteur commun étant complété par le fait que les points de l'espace ne pouvant pas être représentés dans une image de l'espace ou un profil de hauteur à cause d'ombres portées sont complétés à l'aide d'images de l'espace ou de profils de hauteur d'autres paires de caméras (11, 11').

2. Sas pour personnes selon le revendication 1, **caractérisé en ce que** le volume d'espace à surveiller (10) est délimité spatialement au moins d'un côté, par exemple par au moins une paroi (13), et/ou délimité ou renfermé par au moins une fermeture.

3. Sas pour personnes selon l'une des revendications précédentes, **caractérisé en ce que** la zone de visée (21) de la caméra est orientée de telle façon que les limites de la zone de visée (21) passent au moins en grande partie, au moins d'un côté, parallèlement à la délimitation du volume d'espace à surveiller (10).

4. Sas pour personnes selon l'une des revendications précédentes, **caractérisé en ce que** la zone de visée (21) des caméras est orientée de telle sorte que les limites de la zone de visée (21) coupent au moins d'un côté une délimitation de l'espace faisant face à la paire de caméras (11, 11') au-dessus d'une hauteur de tête pouvant être prédéterminée.

5. Sas pour personnes selon l'une des revendications précédentes, **caractérisé en ce que** les caméras sont disposées avec leur axe longitudinal sensiblement horizontal au-dessus de la zone de l'espace, un dispositif de miroirs (14, 14'), grâce auquel les caméras voient la zone de l'espace, étant disposé dans le champ de visée des caméras.

6. Sas pour personnes selon l'une des revendications précédentes, **caractérisé en ce que** le matériel de calculateur associé aux caméras et/ou un logiciel de calcul sont adaptés pour la numérisation des données des caméras et la création d'un profil de hauteur du volume d'espace à surveiller (10) au-dessus d'un plan de référence (30) sur la base de ces données de caméra.

7. Procédé pour la surveillance d'un volume d'espace à surveiller (10) renfermé dans un sas pour personnes à l'aide de paires de caméras (11, 11') composées de plusieurs caméras disposées par paires au-dessus du volume d'espace (10), dont les différentes caméras couvrent chacune au moins en grande partie la zone du volume d'espace,
**caractérisé en ce que** les paires de caméras (11, 11') sont disposées les unes en face des autre, orientées à partir de directions différentes de l'espace vers le volume d'espace à surveiller (10) et connectées à un matériel de calculateur pour la numérisation d'images de caméra (34, 34') acquises au moyen des caméras et le calcul d'une image de l'espace en trois dimensions à partir d'une superposition des images de caméra (34, 34') de chaque paires de caméras (11, 11'), une image de l'espace en trois dimensions étant créée au moyen du matériel de calculateur à partir des images de caméra (34, 34') de chaque paire de caméras (11, 11') et un profil de hauteur déterminé à partir de celle-ci, un profil de hauteur étant déterminé à partir de celle-ci, un profil de hauteur commun étant complété par le fait que les points de l'espace ne pouvant pas être représentés dans une image de l'espace ou un profil de hauteur à cause d'ombres portées sont complétés à l'aide d'images de l'espace ou de profils de hauteur d'autres paires de caméras (11, 11').

8. Procédé selon la revendication 7, **caractérisé en ce que** les flux de données de vidéo provenant des différentes caméras et/ou des paires de caméras (11, 11') sont numérisés.

9. Procédé selon l'une des revendications 7 ou 8, **caractérisé en ce que** le profil de hauteur est rapporté à un plan de référence (30), les points de l'espace étant calculés à l'aide d'homographies (32, 32', 33, 33') et d'intersections de droites dans l'espace.

10. Procédé selon la revendication 9, **caractérisé en ce que** la position des différents points de l'espace est déterminée par l'intersection des faisceaux de visée (35, 35') des deux caméras d'une paires de caméras (11, 11') sur le point de l'espace correspondant.

11. Procédé selon l'une des revendications 7 à 10, **caractérisé en ce que** le profil de hauteur créé est comparé à des modèles standard, à savoir des profils de hauteur standard de personnes ou d'objets attendus dans le volume d'espace surveillé.

12. Procédé selon la revendication 11, **caractérisé en ce qu'**après la reconnaissance d'un modèle standard, le système vérifie si un autre modèle standard peut être ajouté dans l'espace restant.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050249382 A1